# EUROPEAN PATENT APPLICATION

(11) **EP 2 287 358 A1**
(43) Date of publication of application: **23.02.2011**
(21) Application number: 09766710.9
(22) Date of filing: 12.06.2009
(51) Int. Cl.: C23C 22/34

(54) **ANTI-CORROSION TREATED METAL, COMPOSITION FOR FORMING AN ANTI-CORROSION MEMBRANE, AND METHOD FOR FORMING AN ANTI-CORROSION MEMBRANE USING SAID COMPOSITION**

(30) Priority: 19.06.2008 JP 2008160625
(71) Applicant: Sambix Corporation, Kooriyama-shi Fukushima 963-8061 (JP)
(72) Inventor: SAWATARI, Akira, Kooriyama-shi Fukushima 963-8061 (JP); MIZUNO, Eiki, Kooriyama-shi Fukushima 963-8061 (JP); MIZUNO, Akiyoshi, Kooriyama-shi Fukushima 963-8061 (JP); SAWATARI, Touru, Kooriyama-shi Fukushima 963-8061 (JP); KATANO, Takazumi, Zama-shi, Kanagawa (JP)
(74) Representative: Twelmeier Mommer & Partner
(86) International application number: PCT/JP2009/061145
(87) International publication number: WO 2009/154262

(57) **Abstract**

The present invention relates to an anti-rust treated metal in which an anti-rust film having excellent rust resistance and rust resistance durability is formed on a surface of a metal substrate, a composition for forming an anti-rust film, and a method for forming an anti-rust film using the same. The anti-rust treated metal 1 of the present invention includes a first anti-rust film 4 that is formed in close contact with a surface of a metal substrate 2 (a surface of a metal film 3) and that mainly contains a zirconium compound and a fluorine compound, and a second anti-rust film 5 that is formed on an upper layer portion of the first anti-rust film 4 and that mainly contains a metal ion and/or a metal compound. Further, the composition for forming an anti-rust film of the present invention includes a first treatment solution containing a zirconium compound and a fluorine compound, a second treatment solution for subsequently treating the surface having been treated by the first treatment solution, the second treatment solution containing a metal ion and/or a metal compound, and optionally a third treatment solution for treating the surface of the second anti-rust film, the third treatment solution containing a silicate or a polymer.

## Description

### TECHNICAL FIELD

The present invention relates to an anti-rust treated metal in which an anti-rust film having excellent rust resistance is formed on a surface of a metal substrate, a composition for forming an anti-rust film, and a method for forming an anti-rust film using the same.

### BACKGROUND ART

Conventionally, to protect the surface of a metal substrate, to prevent the occurrence of rust, and to improve functionality, decorative properties and the like, it is common to perform a chemical conversion coating treatment with a treatment solution containing hexavalent chromium, or carry out a plating treatment and then perform a surface treatment with a treatment solution containing hexavalent chromium.

Hexavalent chromium has excellent rust resistance, and is relatively easy to use in a treatment operation. Furthermore, an anti-rust film formed from hexavalent chromium has a so-called "self-healing" action in which the film is re-formed even if the film is damaged, such as by a cut on the surface of the metal substrate. However, hexavalent chromium is extremely toxic, and has a large impact on the environment.

Therefore, as a method for treating with a treatment solution that does not contain hexavalent chromium, for example, organic anti-rust film treatments have been proposed, which use a treatment solution containing tanninc acid or a treatment solution containing tanninc acid and some other components (refer to Patent Documents 1 to 5).

Furthermore, although surface treatments using a substitute metal for hexavalent chromium have been proposed (refer to Patent Documents 6 to 9), compared with a conventional surface treatment including hexavalent chromium, the corrosion resistance cannot be said to be sufficient. Moreover, it remains the case that such treatments are not really ready for practical use, since they lack a self-healing ability when the film is cut or the like.

In addition, a metal surface treatment method has been proposed that includes a step of treating a metal surface by bringing the metal surface into contact with a composition containing a phosphate, and a step of bringing this surface that has undergone the contact treatment into contact with a composition containing vegetal tannin at an amount sufficient to confer corrosion resistance and humidity resistance (refer to Patent Document 10). However, the improvement in rust resistance, specifically, corrosion resistance, cannot be said to be sufficient, and moreover, it remains the case that this method is not really ready for practical use, due to the fact that an anti-rust effect against cuts and the like to the surface of the metal substrate and the like cannot be obtained, since a self-healing action like that of hexavalent chromium is lacking.

### PRIOR ART DOCUMENTS

### [Patent Documents]

[Patent Document 1] Japanese Patent Application Laid-Open No. Sho. 48-27936
[Patent Document 2] Japanese Patent Application Laid-Open No. Sho. 51-71233
[Patent Document 3] Japanese Patent Application Laid-Open No. Sho. 57-16177
[Patent Document 4] Japanese Patent Application Laid-Open No. Sho. 58-197285
[Patent Document 5] Japanese Patent Application Laid-Open No. Sho. 59-116381
[Patent Document 6] Japanese Patent Application Laid-Open No. Sho. 56-43384
[Patent Document 7] Japanese Patent Application Laid-Open No. Sho. 52-92836
[Patent Document 8] Japanese Patent Application Laid-Open No. Sho. 57-145987
[Patent Document 9] Japanese Patent Application Laid-Open No. Hei. 9-53192
[Patent Document 10] Japanese Patent Application Laid-Open No. Sho. 49-47224

### SUMMARY OF THE INVENTION

### PROBLEMS TO BE SOLVED BY THE INVENTION

It is a first object of the present invention to provide an anti-rust treated metal, in which an anti-rust film is formed on the surface of a metal substrate without using a harmful chemical agent that has an impact on the environment such as hexavalent chromium, the anti-rust film having excellent rust resistance equivalent to that of hexavalent chromium, the anti-rust film maintaining rust resistance even if a cut and the like occurs on the anti-rust film.

It is a second object of the present invention to provide a composition for forming an anti-rust film that is used to easily obtain the anti-rust treated metal according to the present invention.

It is a third object of the present invention to provide a method for forming an anti-rust film for easily obtaining the anti-rust treated metal according to the present invention by treating the surface of a metal substrate using the composition for forming an anti-rust film according to the present invention.

### MEANS FOR SOLVING THE PROBLEMS

As a result of diligent investigation to resolve the problems in the conventional art, the present inventors discovered that by, for example, first forming on a surface of a metal substrate a first anti-rust film mainly including a mixture of a zirconium compound and a fluorine compound, and forming on an upper layer portion of the first anti-rust film a second anti-rust film mainly including a metal ion and the like, for example, the metal ions are caused to be adsorbed, sorbed, chemically bonded and the like to the upper layer portion including the surface of the first anti-rust film, thereby forming the second anti-rust film, and due to a synergistic effect of these anti-rust films, rust resistance is remarkably improved, so that rust resistance is maintained even if these anti-rust films are damaged, such as by a cut. In addition, the present inventors discovered that by optionally forming a third anti-rust film containing a silicate on the upper layer portion of the second anti-rust film, rust resistance is even more remarkably improved, thereby completing the present invention.

The invention according to claim 1 of the present invention is an anti-rust treated metal, characterized by including a first anti-rust film that is formed in close contact with a surface of a metal substrate and that mainly contains a mixture of a zirconium compound and a fluorine compound and/or a compound containing zirconium and fluorine, and a second anti-rust film that is formed on an upper layer portion of the first anti-rust film and that mainly contains a metal ion and/or a metal compound.

The invention according to claim 2 of the present invention is, in the anti-rust treated metal according to claim 1, characterized in that the metal substrate has a metal surface selected from the group consisting of zinc, nickel, aluminum, magnesium, copper, iron, and an alloy thereof.

The invention according to claim 3 of the present invention is, in the anti-rust treated metal according to claim 1 or 2, characterized in that the metal ion includes one kind or a mixture of two kinds or more of metal ions of Mo, V, Ti, W, and Zr, and that the metal compound includes one kind or a mixture of two kinds or more of a metal compound including these metals.

The invention according to claim 4 of the present invention is, in the anti-rust treated metal according to any of claims 1 to 3, characterized in that the fluorine compound is at least one fluorine compound selected from ammonium hydrogen fluoride, hydrofluoric acid, and a hydrogen fluoride alkali metal salt, and that the compound containing zirconium and fluorine is ammonium zirconium fluoride.

The invention according to claim 5 of the present invention is, in the anti-rust treated metal according to any of claims 1 to 4, characterized by including a third anti-rust film mainly containing a silicate or a polymer formed on an upper layer portion of the second anti-rust film.

The invention according to claim 6 of the present invention is a composition for forming an anti-rust film, characterized by including: a first treatment solution for treating a surface of a metal substrate, the first treatment solution mainly containing a mixture of a zirconium compound and a fluorine compound and/or a compound containing zirconium and fluorine; a second treatment solution for subsequently treating the surface having been treated by the first treatment solution, a second treatment solution mainly containing a metal ion and/or a metal compound; and optionally a third treatment solution for treating a surface of the second anti-rust film, the third treatment solution mainly containing a silicate or a polymer.

The invention according to claim 7 of the present invention is, in the composition for forming an anti-rust film according to claim 6, characterized in that a concentration of zirconium in the first treatment solution is in a range of 1 to 50 g/l, a concentration of fluorine is in a range of 1 to 50 g/l, and a pH is in a range of 1.0 to 4.0.

The invention according to claim 8 of the present invention is, in the composition for forming an anti-rust film according to claim 6 or 7, characterized in that a concentration of the metal ion and/or the metal compound in the second treatment solution is, in terms of metal ions, in a range of 0.01 to 50 g/l, and a pH is in a range of 3.0 to 10.0.

The invention according to claim 9 of the present invention is a method for forming an anti-rust film, characterized by: treating a surface of a metal substrate with the first treatment solution according to claim 6 or 7, then washing with water to form a first anti-rust film that is in close contact with the surface of the metal substrate and that mainly contains a mixture of a zirconium compound and a fluorine compound and/or a compound containing zirconium and fluorine; treating with the second treatment solution according to claim 6 or 8 to form a second anti-rust film on an upper layer portion of the first anti-rust film, the second anti-rust film mainly containing a metal ion and/or a metal compound; then optionally washing with water and drying, or optionally further treating with the third treatment solution according to claim 5 to form a third anti-rust film on an upper layer portion of the second anti-rust film, the third anti-rust film mainly containing a silicate or a polymer, and then optionally washing with water and drying.

### ADVANTAGES OF THE INVENTION

The invention according to claim 1 of the present invention is an anti-rust treated metal, characterized by including a first anti-rust film that is formed in close contact with a surface of a metal substrate and that mainly contains a mixture of a zirconium compound and a fluorine compound and/or a compound containing zirconium and fluorine, and a second anti-rust film that is formed on an upper layer portion of the first anti-rust film and that mainly contains metal ions and/or a metal compound.

The anti-rust treated metal according to claim 1 provides the remarkable advantages of having excellent rust resistance while also being able to maintain rust resistance even if a cut that reaches the metal substrate occurs on the anti-rust film, since the anti-rust treated metal has on the surface of a metal substrate a plurality of anti-rust films which have excellent rust resistance equivalent to that of hexavalent chromium, and which are formed without using a harmful chemical agent that has an impact on the environment like hexavalent chromium.

The invention according to claim 2 of the present invention is, in the anti-rust treated metal according to claim 1, characterized in that the metal substrate has a metal surface selected from the group consisting of zinc, nickel, aluminum, magnesium, copper, iron, and an alloy thereof. The anti-rust treated metal according to claim 2 provides the even more remarkable advantage of having even better rust resistance.

The invention according to claim 3 of the present invention is, in the anti-rust treated metal according to claim 1 or 2, characterized in that the metal ion includes one kind or a mixture of two kinds or more of metal ions of Mo, V, Ti, W, and Zr, and that the metal compound includes one kind or a mixture of two kinds or more of a metal compound including these metals. The anti-rust treated metal according to claim 3 provides the even more remarkable advantages of having even better rust resistance, and of also being able to reliably maintain rust resistance even if a cut that reaches the metal substrate occurs on the anti-rust film.

The invention according to claim 4 of the present invention is, in the anti-rust treated metal according to any of claims 1 to 3, characterized in that the fluorine compound is at least one fluorine compound selected from ammonium hydrogen fluoride, hydrofluoric acid, and a hydrogen fluoride alkali metal salt, and that the compound containing zirconium and fluorine is ammonium zirconium fluoride. The anti-rust treated metal according to claim 4 provides the even more remarkable advantages of enabling the first anti-rust film to be easily formed on the surface of the metal substrate, and of having even better rust resistance since the first anti-rust film can be formed on the surface of the metal substrate even more closely.

The invention according to claim 5 of the present invention is, in the anti-rust treated metal according to any of claims 1 to 4, characterized by including a third anti-rust film mainly containing a silicate or a polymer formed on an upper layer portion of the second anti-rust film. The anti-rust treated metal according to claim 5 provides the even more remarkable advantage of having even better rust resistance.

The invention according to claim 6 of the present invention is a composition for forming an anti-rust film, characterized by including: a first treatment solution for treating a surface of a metal substrate, the first treatment solution mainly containing a mixture of a zirconium compound and a fluorine compound and/or a compound containing zirconium and fluorine; a second treatment solution for subsequently treating the surface having been treated by the first treatment solution, the second treatment solution mainly containing a metal ion and/or a metal compound; and optionally a third treatment solution for treating the surface of the second anti-rust film, the third treatment solution mainly containing a silicate or a polymer.

The composition for forming an anti-rust film according to claim 6 provides the remarkable advantages of enabling a first anti-rust film to be easily formed in close contact with the surface of the metal substrate using the first treatment solution, enabling a second anti-rust film to be easily formed in close contact with the upper layer portion of the first anti-rust film by subsequently treating with the second treatment solution, and enabling a third anti-rust film containing a silicate or a polymer to be easily formed in close contact with the upper layer portion of the second anti-rust film by optionally further treating with the third treatment solution.

The invention according to claim 7 of the present invention is, in the composition for forming an anti-rust film according to claim 6, characterized in that a concentration of zirconium in the first treatment solution is in a range of 1 to 50 g/l, a concentration of fluorine is in a range of 1 to 50 g/l, and a pH is in a range of 1.0 to 4.0.

The composition for forming an anti-rust film according to claim 7 provides the even more remarkable advantage of enabling the first anti-rust film having good rust resistance which mainly contains a zirconium compound and a fluorine compound to be easily formed in close contact with the surface of the metal substrate using such the first treatment solution.

The invention according to claim 8 of the present invention is, in the composition for forming an anti-rust film according to claim 6 or 7, characterized in that a concentration of the metal ion and/or the metal compound in the second treatment solution is, in terms of metal ions, in a range of 0.01 to 50 g/l, and a pH is in a range of 3.0 to 10.0.

The composition for forming an anti-rust film according to claim 8 provides the even more remarkable advantage of enabling the second anti-rust film having good rust resistance which mainly contains the metal ion and/or the metal compound to be easily formed in close contact with the surface of the first anti-rust film using such the second treatment solution.

The invention according to claim 9 of the present invention is a method for forming an anti-rust film, characterized by: treating a surface of a metal substrate with the first treatment solution according to claim 6 or 7, then washing with water to form a first anti-rust film that is in close contact with the surface of the metal substrate and that mainly contains a mixture of a zirconium compound and a fluorine compound and/or a compound containing zirconium and fluorine; treating with the second treatment solution according to claim 6 or 8 to form a second anti-rust film on an upper layer portion of the first anti-rust film, the second anti-rust film mainly containing a metal ion and/or a metal compound; then optionally washing with water and drying, or optionally further treating with the third treatment solution according to claim 5 to form a third anti-rust film on an upper layer portion of the second anti-rust film, the third anti-rust film mainly containing a silicate or a polymer, and then optionally washing with water and drying.

The invention according to claim 9 of the present invention provides the remarkable advantage of enabling a plurality of anti-rust films having excellent adhesion properties, rust resistance, and rust resistance durability equivalent to hexavalent chromium to be easily formed on the surface of the metal substrate using the composition for forming an anti-rust film according to the present invention, without using a harmful chemical agent that has an impact on the environment such as hexavalent chromium.

### BRIEF DESCRIPTION OF THE DRAWINGS

Fig. 1 is an explanatory diagram schematically illustrating the results of XPS analysis of the surface of an embodiment of an anti-rust treated metal according to the present invention.
Fig. 2 is an explanatory diagram schematically illustrating the results of XPS analysis of the surface of another embodiment of an anti-rust treated metal according to the present invention.
Fig. 3 is a graph illustrating the results of XPS analysis of the surface of an anti-rust treated metal according to the present invention obtained in Example 1.
Fig. 4 is a graph illustrating the results of XPS analysis of the surface of another anti-rust treated metal according to the present invention obtained in Example 2.
Fig. 5 is a graph illustrating the results of XPS analysis of the surface of an anti-rust treated metal for comparison obtained in Comparative Example 1.

### BEST MODE FOR CARRYING OUT THE INVENTION

The present invention will now be described in more detail.

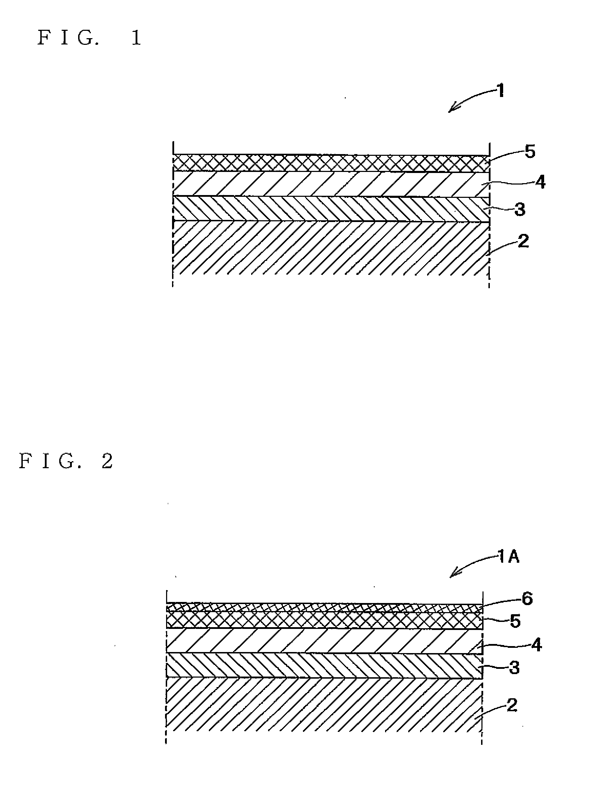

Fig. 1 is an explanatory diagram schematically illustrating the results of analysis in the thickness direction of an anti-rust film using X-ray photoelectron spectrometry (hereinafter referred to as XPS analysis) on a cross-section of an embodiment of the anti-rust treated metal according to the present invention. Fig. 2 is an explanatory diagram schematically illustrating the results of XPS analysis performed in the same manner on a cross-section of another embodiment of the anti-rust treated metal according to the present invention. The reference numerals in Fig. 2 that are denoted with the same numeral in Fig. 1 refer to the same part as in Fig. 1.

In Fig. 1, an anti-rust treated metal 1 according to the present invention includes a first anti-rust film 4 which is formed in close contact with a surface of a metal film 3 formed by a technique such as plating on a surface of a metal substrate 2 and which mainly contains a zirconium compound and a fluorine compound, and a second anti-rust film 5, which is formed on an upper layer portion of the first anti-rust film 4 and which mainly contains a metal ion and/or a metal compound.

The zirconium compound used in the present invention is not especially limited. Specific examples thereof include zirconium nitrate, zirconium sulfate, and zirconium oxide. One kind or a mixture of two kinds or more of these zirconium compounds may be used.

The fluorine compound used in the present invention is not especially limited, as long as it is a fluorine compound component that aids in the formation of the first anti-rust film 4, and that can form the first anti-rust film 4 in close contact with the surface of the metal film 3. Specific examples thereof include ammonium hydrogen fluoride, hydrofluoric acid, a hydrogen fluoride alkali metal salt, and a mixture of two kinds or more of these compounds.

Among these, it is preferred to use ammonium hydrogen fluoride as the fluoride compound, as the formation of the first anti-rust film can be carried out much more easily and this allows even better rust resistance to be achieved because the first anti-rust film can be formed in close contact with the surface of the metal film 3 more.

The compound containing zirconium and fluorine used in the present invention is not especially limited. Specific examples thereof include ammonium zirconium hexafluoride. It is preferred to use ammonium zirconium hexafluoride, as the formation of the first anti-rust film can be carried out much more easily and this allows even better rust resistance to be achieved because the first anti-rust film can be formed in close contact with the surface of the metal film 3 more.

In the present invention, the mixture of a zirconium compound and a fluorine compound and the compound containing zirconium and fluorine can also be used together.

The material for the metal film 3 is not especially limited. Specific examples thereof include a metal selected from the group consisting of zinc, nickel, aluminum, magnesium, copper, iron, and an alloy thereof.

The metal substrate 2 may be formed from these metals themselves. Alternatively, the body of the metal substrate 2 may be formed from a material such as some other metal or a ceramic, with the metal film 3 selected from the group consisting of zinc, nickel, aluminum, magnesium, copper, iron, and an alloy thereof or being a combination of them, and the metal film 3 is formed on the metal substrate 2 by a technique such as electroplating, chemical plating, vacuum deposition or by a technique such as laminating and the like.

The metal ion used in the present invention is not especially limited. Specific examples thereof include one kind or a mixture of two kinds or more of metal ions of Mo, V, Ti, W, and Zr. The metal compound used in the present invention is one kind or a mixture of two kinds or more of a metal compound including these metals.

The zirconium compound included in the first anti-rust film 4 and the metal compound included in the second anti-rust film 5 may be different metal compounds, or may be the same zirconium compound.

Specific examples of the metal compound include one kind or a mixture of two kinds or more of a metal compound such as a molybdate compound, a vanadate compound, a titanate compound, a tungstate compound, and a zirconate compound, a metal oxide containing the above-described metals, and a fluorine metal compound containing the above-described metals.

The fluorine metal compound containing the above-described metals may be the same as the fluorine compound included in the first anti-rust film 4.

Examples of molybdate compounds that can be used include ammonium molybdate and sodium molybdate.

Examples of vanadate compounds that can be used include ammonium vanadate and sodium vanadate.

Examples of tungstate compounds that can be used include ammonium tungstate and sodium tungstate.

Examples of titanate compounds and zirconate compounds that can be used similarly include various alkali metal salts and halides.

To form the first anti-rust film 4 illustrated in Fig. 1 mainly containing a zirconium compound and a fluorine compound in close contact with the surface of the metal film 3, first, the surface of the metal film 3 is treated with a first treatment solution containing a zirconium compound and a fluorine compound.

The concentration of the zirconium compound, the concentration of the compound containing zirconium and fluorine, the concentration of the fluorine compound, and the pH in the first treatment solution are not especially limited. However, in terms of zirconium, the concentration is preferably in the range of 1 to 50 g/l, and more preferably 2 to 40 g/l, and in terms of fluorine, preferably in the range of 1 to 50 g/l, and more preferably 2 to 30 g/l. The pH is preferably in the range of 1.0 to 4.0, and more preferably 1.5 to 3.5.

If the concentration in terms of zirconium is less than 1 g/l, the first anti-rust film 4 that has good corrosion resistance may not be obtained, while if the concentration is more than 50 g/l, further advantageous effects for a shortening of the treatment time and in anti-rust performance cannot be expected.

Similarly, if the concentration in terms of fluorine is less than 1 g/l, the first anti-rust film 4 that has good corrosion resistance may not be obtained, while if the concentration is more than 50 g/l, further advantageous effects for a shortening of the treatment time and in anti-rust performance cannot be expected.

Furthermore, it is preferred that the temperature of this first treatment solution is about 10 to 50°C. If the temperature is less than 10°C, formation of the film can be insufficient. If the temperature is more than 50°C, not only is it more difficult to obtain a good film having corrosion resistance, but there is a large amount of evaporation of the treatment solution, which is not cost efficient. Furthermore, the treatment time with the first treatment solution is preferably about 10 to 180 seconds. If the treatment time is less than 10 seconds, formation of the first anti-rust film 4 can be insufficient. If the treatment time is more than 180 seconds, further advantageous effects in lowering of the treatment concentration and in anti-rust performance cannot be expected.

If the pH of the first treatment solution is less than 1.0, the formed first anti-rust film 4 tends to re-dissolve, while if the pH is more than 4.0, the first anti-rust film 4 is not formed as easily even for a long treatment time.

The pH of the first treatment solution can be adjusted using an alkaline substance or an acidic substance. Examples of alkaline substances for pH adjustment include sodium hydroxide, potassium hydroxide, lithium hydroxide, and ammonia water. Examples of acidic substances for pH adjustment include hydrochloric acid, sulfuric acid, nitric acid, phosphoric acid, hydrofluoric acid, formic acid, acetic acid, an organic acid, and an organic carboxylic acid.

The first treatment solution may include a known additive, such as an oxidizing agent, a reducing agent, and a chelating agent as a stabilizing agent in the treatment solution.

The thickness of the first anti-rust film 4 obtained by treating with the first treatment solution is not especially limited. However, when the treatment is carried out under the above-described conditions, a first anti-rust film 4 having a thickness of about 0.05 to 0.3 µm that is thoroughly in close contact with the metal film 3 can be obtained.

Next, to form the second anti-rust film 5 on an upper layer portion including the surface of the thus-formed first anti-rust film 4, immediately after the treatment with the first treatment solution, and preferably after washing with water after treating with the first treatment solution to essentially wash the first treatment solution off of the first anti-rust film 4, the surface of the first anti-rust film 4 is treated with a second treatment solution mainly containing a metal ion and/or a metal compound.

After treating with the second treatment solution, the anti-rust treated metal 1 according to the present invention can be obtained by optionally washing with water to essentially wash the second treatment solution off of the second anti-rust film 5, and then finishing by drying.

The pH of the second treatment solution is not especially limited. However, it is preferred to adjust the pH to be in the range of 3.0 to 10.0, and more preferably 3.5 to 8.0. If the pH of the second treatment solution is less than 3.0 or more than 10.0, the formed second anti-rust film 5 tends to re-dissolve.

The concentration of the metal ion and/or the metal compound in the second treatment solution is not especially limited. However, in terms of metal ions, 0.01 to 50 g/l is preferred, and 0.1 to 30 g/l is more preferred. If this concentration is less than 0.01 g/l, rust resistance may deteriorate, while further advantageous rust resistance cannot be expected even if this concentration is more than 50 g/l, and thus may not be cost efficient.

It is preferred to adjust the pH of the second treatment solution using an acidic substance or an alkaline substance. Examples of alkaline substances for pH adjustment include sodium hydroxide, potassium hydroxide, lithium hydroxide, and ammonia water. Examples of acidic substances for pH adjustment include hydrochloric acid, sulfuric acid, nitric acid, phosphoric acid, hydrofluoric acid, formic acid, acetic acid, an organic acid, and an organic carboxylic acid.

The treatment temperature with the second treatment solution is about 10 to 60°C, and preferably about 15 to 50°C. If the temperature is less than 10°C, the reaction rate of the adsorption, sorption, chemical bonding and the like of the metal ion on/in/to the first anti-rust film 4 is slow, which can make it impossible to obtain sufficient corrosion resistance. If the temperature is more than 60°C, the amount of evaporation of the treatment solution increases, which is not cost efficient.

Furthermore, the treatment time with the second treatment solution is about 5 to 180 seconds, and preferably about 10 to 150 seconds. If the treatment time is less than 10 seconds, formation of the second anti-rust film 5 can be insufficient. If the treatment time is more than 150 seconds, further advantageous effects in lowering of the treatment concentration and in anti-rust performance cannot be expected.

The second treatment solution may include, in addition to the metal ion and/or metal compound, a known additive, such as an oxidizing agent, a reducing agent, and a chelating agent as a stabilizing agent in the treatment solution of the metal ion.

The thickness of the second anti-rust film 5 obtained by treating with the second treatment solution is not especially limited. However, when the treatment is carried out under the above-described conditions, a second anti-rust film 5 having a thickness of about 0.05 to 0.2 µm on the upper layer portion including the surface of the first anti-rust film 4 can be obtained.

The total thickness of the first anti-rust film 4 and the second anti-rust film 5 which are thus formed on the metal film 3 is not especially limited. However, when the treatment is carried out under the above-described conditions, anti-rust films having excellent rust resistance and having a total thickness of about 0.1 to 0.5 µm can be obtained.

Since the first anti-rust film 4 illustrated in Fig. 1 is formed in close contact with the surface of the metal film 3, and the second anti-rust film 5 is formed integrally with an upper layer portion including the surface of the first anti-rust film 4, the anti-rust treated metal 1 according to the present invention has excellent rust resistance. Further, this rust resistance is maintained even, for example, if the metal substrate 2 and the metal film 3 become exposed due to the occurrence of a cut on the anti-rust films 4 and 5, because the zirconium compound and the metal ion and/or metal compound in the first anti-rust film 4 and the second anti-rust film 5 are fed to this cut, whereby the cut is coated over.

Fig. 2 is an explanatory diagram schematically illustrating the results for another embodiment of the anti-rust treated metal according to the present invention.

In Fig. 2, an anti-rust treated metal 1A according to the present invention includes a first anti-rust film 4 that is formed in close contact with a surface of a metal film 3 formed by a technique such as plating on a surface of a metal substrate 2, a second anti-rust film 5 that is formed integrally with an upper layer portion of the first anti-rust film 4, and a silicate-based third anti-rust film 6 that is formed in close contact with and integrally with an upper surface portion of the second anti-rust film 5.

The anti-rust treated metal 1A including a plurality of anti-rust films having the structure illustrated in illustrated in Fig. 2 has even better rust resistance than the anti-rust treated metal 1 illustrated in Fig. 1. Furthermore, the anti-rust treated metal 1A maintains this rust resistance even, for example, if the metal substrate 2 and the metal film 3 become exposed due to the occurrence of a cut on the plurality of anti-rust films, because, similar to the above-described case, the zirconium compound and the metal ion and/or the metal compound are fed to this cut, whereby the cut is coated over.

The silicate concentration and the pH in the third treatment solution are not especially limited. However, in terms of silicon, the concentration is preferably in the range of 1 to 50 g/l, and more preferably 2 to 40 g/l. Further, it is preferred to adjust the pH to be in the range of 3.0 to 10.0, and more preferably 3.5 to 8.0. If the pH of the third treatment solution is less than 3.0 or more than 10.0, the formed third anti-rust film 6 tends to re-dissolve.

If the concentration in terms of silicon is less than 1 g/l, the third anti-rust film 6 that has good rust resistance may not be obtained, while if the concentration is more than 50 g/l, further advantageous effects for a shortening of the treatment time and in anti-rust performance cannot be expected.

Furthermore, it is preferred that the temperature of this third treatment solution is about 10 to 50°C. If the temperature is less than 10°C, formation of the film can be insufficient. If the temperature is more than 50°C, not only is it more difficult to obtain a good film having corrosion resistance, but there is a large amount of evaporation of the treatment solution, which is not cost efficient. Furthermore, the treatment time with the third treatment solution is preferably about 10 to 180 seconds. If the treatment time is less than 10 seconds, formation of the third anti-rust film 6 can be insufficient. If the treatment time is more than 180 seconds, further advantageous effects in lowering of the treatment concentration and in anti-rust performance cannot be expected.

The pH of the third treatment solution can be adjusted using an alkaline substance or an acidic substance. Examples of alkaline substances for pH adjustment include sodium hydroxide, potassium hydroxide, lithium hydroxide, and ammonia water. Examples of acidic substances for pH adjustment include hydrochloric acid, sulfuric acid, nitric acid, phosphoric acid, hydrofluoric acid, formic acid, acetic acid, an organic acid, and an organic carboxylic acid.

The third treatment solution may include a known additive, such as an oxidizing agent, a reducing agent, and a chelating agent as a stabilizing agent in the treatment solution.

The thickness of the third anti-rust film 6 obtained by treating with the third treatment solution is not especially limited. However, when the treatment is carried out under the above-described conditions, a third anti-rust film 6 having a thickness of about 0.05 to 0.3 µm that is thoroughly in close contact with the second anti-rust film 5 can be obtained.

After treating with the third treatment solution, the anti-rust treated metal 1A according to the present invention can be obtained by optionally washing with water to essentially wash the third treatment solution off of the third anti-rust film 6, and then finishing by drying.

The total thickness of the first anti-rust film 4, the second anti-rust film 5, and the third anti-rust film 6 which are thus formed on the metal film 3 is not especially limited. However, when the treatment is carried out under the above-described conditions, anti-rust films having excellent rust resistance and having a total thickness of about 0.15 to 0.8 µm can be obtained.

If the third treatment solution used in the present invention is one mainly containing a polymer, the polymer may be a thermosetting resin, a photocurable resin, a thermoplastic resin, a synthetic rubber, natural rubber, or a mixture of two or more of these, as long as the third anti-rust film 6, which is in close contact with the second anti-rust film 5 and which has excellent rust resistance, can be formed by applying onto the second anti-rust film 5.

Specific examples of the thermosetting resin used in the present invention include phenolic resins, urea resins, melamine resins, unsaturated polyester resins, epoxy resins, diallyl phthalate resins, polyurethane resins, or a mixture of two or more kinds of these.

Specific examples of the epoxy resin include a mixture of two kinds or more of a bisphenol A epoxy compound, a bisphenol F epoxy compound, a tetrabromobisphenol A epoxy compound, a phenol novolac epoxy compound, a cresol novolac epoxy compound, a glycidyl ester epoxy compound, an alicyclic epoxy compound, a hydantoin epoxy compound and the like optionally blended with a reactive diluent and a catalyst for a phenol resin, such as a phenol novolac resin, a cresol novolac resin, a naphthol-modified phenolic resin, a dicyclopentadiene-modified phenolic resin, and a paraxylene-modified phenolic resin, an acid anhydride, and an amine compound.

Specific examples of the photocurable resin used in the present invention include: an epoxy resin prepolymer, such as an acrylic acid ester of an epoxy resin, for example, a diglycidyl ether diacrylate of bisphenol A, a reaction product of an epoxy resin, acrylic acid, and methyltetrahydrophthalic anhydride, a reaction product of an epoxy resin and 2-hydroxyethyl acrylate, and a reaction product of a diglycidyl ether of an epoxy resin and a diallylamine; an unsaturated polyester prepolymer such as a ring-opening copolymerization ester of glycidyl diacrylate and phthalic anhydride, an ester of a methacrylic acid dimer and a polyol, a polyester obtained from acrylic acid, phthalic anhydride, and propylene oxide, and a reaction product of polyethylene glycol, maleic anhydride, and glycidyl methacrylate; a polyvinyl alcohol prepolymer such as a reaction product of polyvinyl alcohol and N-methylolacrylamide and a prepolymer obtained by esterifying polyvinyl alcohol with succinic anhydride and then adding glycidyl methacrylate thereto; a polyamide prepolymer such as a prepolymer obtained by reacting p,p'-diaminodiphenyl with a diallyl ester of pyromellitic dianhydride; and a polyacrylic acid or a maleic acid copolymer prepolymer such as a reaction product of an ethylene-maleic anhydride copolymer and an allylamine, a prepolymer obtained by reacting a methyl vinyl ether-maleic anhydride copolymer and 2-hydroxyethyl acrylate, or this prepolymer further reacted with glycidyl methacrylate. In addition, further examples include a urethane polymer which has an acryloyl group or a methacryloyl group on both ends, in which a polyoxyalkylene segment, a saturated polyester segment, or both of these are linked via a urethane bond.

The photopolymerization initiator used in the curing of the photocurable resin in the present invention may be conventionally known. Examples thereof include 1-hydroxycyclohexyl-phenyl-ketone, 2-hydroxy-2-methyl-1-phenyl-propan-1-one, 1-[4-(2-hydroxyethoxy)-phenyl]-2-hydroxy-methyl-1-propan-1-one, 2-methyl-1-[4-(methylthio)phenyl]-2-morpholinopropan-1-one, 2-benzyl-2-dimethylamino-1-(4-morpholinophenyl)-butanon-1-bis(2,6-dimethoxybenzoyl)-2,4,4-trimethyl-pentyl phosphine oxide-bis(2,4,6-trimethylbenzoyl)-phenyl phosphine oxide, and the like.

Specific examples of the thermoplastic resin used in the present invention include polyesters, polyamides, halogenated polyolefins, polyimides, acrylics, ethylene-vinyl alcohol copolymers, polyvinyl chlorides, polyvinylidene chlorides, polystyrenes, polycarbonates, acrylonitrile-butadiene-styrene copolymers, and polyether sulfones.

The third treatment solution mainly containing a polymer used in the present invention may be a solvent or an emulsion, and may be used to form the third anti-rust film 6 by applying onto the second anti-rust film 5 to form a film as is or by drying. Alternatively, the third treatment solution may be used to form the third anti-rust film 6 by heating or irradiating with UV-rays to perform curing.

The thickness of the third anti-rust film 6 obtained by treating with the third treatment solution mainly containing a polymer is not especially limited. However, the thickness is preferably about 0.1 to 100 µm, since this enables better close adhesion with the second anti-rust film 5 and better rust resistance.

### Examples

The present invention will now be described in more detail based on the following examples and comparative examples. However, the present invention is not limited to these examples.

### (Example 1)

A test specimen was produced by zinc plating an SPCC steel sheet (100 × 50 × 1.0 mm) to a plating thickness of 8 to 12 µm. First, this test specimen was dipped for 40 seconds at 25°C in a first treatment solution (zirconium nitrate content 20 g/l, ammonium hydrogen fluoride content 5 g/l, pH 2.1) of a composition for forming the anti-rust film according to the present invention, and then washed with water.

After treating with the first treatment solution and washing with water, the test specimen was subsequently dipped for 40 seconds at 25°C in a second treatment solution (ammonium tungstate, W ion content 5 g/l, pH adjusted to 7) of a composition for forming the anti-rust film according to the present invention, then dried for 10 minutes at 60°C to obtain the anti-rust treated metal according to the present invention.

To evaluate the corrosion resistance of the obtained test specimen, a salt spray test was carried out based on JIS-2371. The evaluation method was carried out by evaluating how long it took for white rust to occur on the test specimen and how long it took for the surface area in which white rust had occurred to exceed 5% (percentage of the total surface area in which white rust had occurred with respect to the total surface area of the specimen).

Table 1 shows the zirconium nitrate content, the ammonium hydrogen fluoride content, and the pH in the first treatment solution, the metal ion content in the second treatment solution, and the results of the salt spray test (time).

### (Examples 2 to 9)

The anti-rust treated metals according to the present invention were obtained by treating in the same manner as Example 1, except for using the first and second treatment solutions shown in Table 1. The results of a salt spray test carried out in the same manner as Example 1 are shown in Table 1.

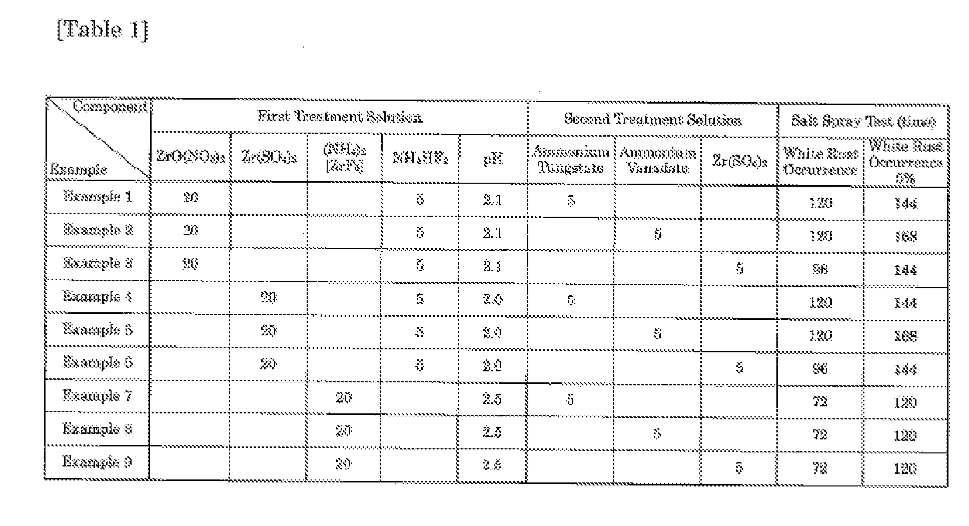

### (Example 10)

Using the same test specimen used in Example 1, first, the test specimen was dipped for 40 seconds at 25°C in a first treatment solution (zirconium nitrate content 20 g/l, ammonium hydrogen fluoride content 5 g/l, pH 2.1) of a composition for forming the anti-rust film according to the present invention, and then washed with water. After treating with the first treatment solution and washing with water, the test specimen was subsequently dipped for 40 seconds at 25°C in a second treatment solution (ammonium tungstate, W ion content 5 g/l, pH adjusted to 7) of a composition for forming the anti-rust film according to the present invention, then dipped for 30 seconds at 25°C in a third treatment solution (potassium silicate content 5 g/l). Then, the test specimen was dried for 10 minutes at 60°C to obtain the anti-rust treated metal according to the present invention. The results of a salt spray test carried out in the same manner as Example 1 are shown in Table 2.

### (Examples 11 to 13)

The anti-rust treated metals according to the present invention were obtained by treating in the same manner as Example 10, except for using the first, second, and third treatment solutions shown in Table 2. The results of a salt spray test carried out in the same manner as Example 1 are shown in Table 2.

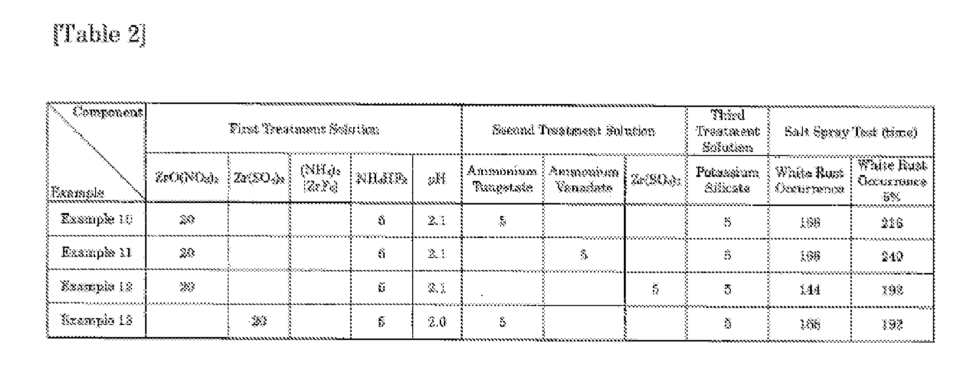

### (Comparative Example 1)

Using the same test specimen used in Example 1, the test specimen was dipped for 40 seconds at 25°C in a first treatment solution (zirconium nitrate content 20 g/l, ammonium hydrogen fluoride content 5 g/l, pH 2.1), washed with water, and dried for 10 minutes at 60°C to obtain an anti-rust treated metal for comparison. The results of a salt spray test carried out in the same manner as Example 1 are shown in Table 3.

### (Comparative Examples 2 and 3)

Anti-rust treated metals for comparison were obtained in the same manner as Comparative Example 1, except for using the first treatment solution shown in Table 3. The results of a salt spray test carried out in the same manner as Example 1 are shown in Table 3.

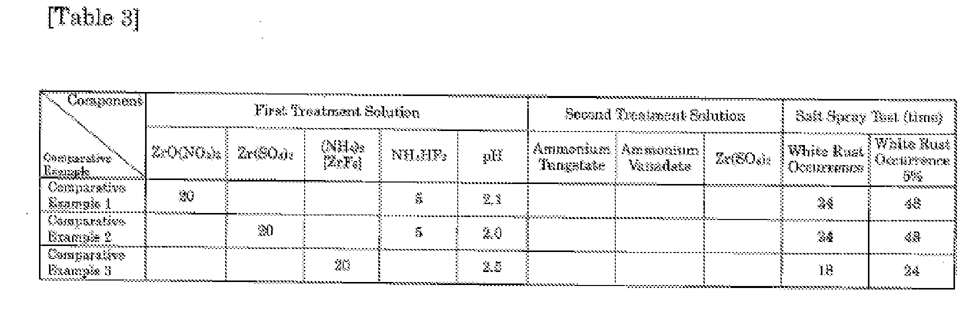

### (Comparative Example 4)

Using the same test specimen used in Example 1, the test specimen was dipped for 40 seconds at 25°C in a second treatment solution (ammonium tungstate, W ion content 5 g/l, pH adjusted to 7), washed with water, and dried for 10 minutes at 60°C to obtain an anti-rust treated metal for comparison. The results of a salt spray test carried out in the same manner as Example 1 are shown in Table 4.

### (Comparative Examples 5 and 6)

Anti-rust treated metals for comparison were obtained in the same manner as Comparative Example 4, except for using the second treatment solution shown in Table 4. The results of a salt spray test carried out in the same manner as Example 1 are shown in Table 4.

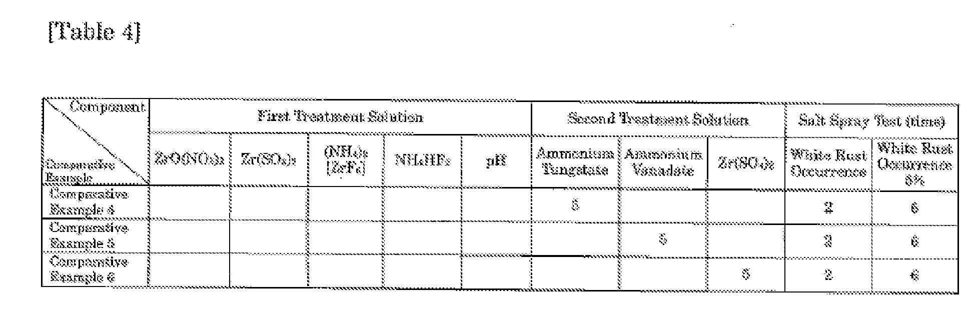

From Table 1, it can be seen that the anti-rust treated metals according to the present invention of Examples 1 to 9 treated with the first and second treatment solutions have excellent rust resistance.

From Table 2, it can be seen that since the anti-rust treated metals according to the present invention of Examples 10 to 13 were further treated with the third treatment solution after treating with the first and second treatment solutions, they have even better rust resistance than the anti-rust treated metals according to the present invention of Examples 1 to 9 that were treated with the first and second treatment solutions.

From Table 3, it can be seen that the anti-rust treated metals of Comparative Examples 1 to 3, which were treated only with the first treatment solution, have poor rust resistance.

From Table 4, it can be seen that the anti-rust treated metals of Comparative Examples 4 to 6, which were treated only with the second treatment solution, have poor rust resistance. (XPS Analysis of Anti-rust Treated Metals According to the Present Invention Obtained in Examples 1 and 2, and XPS Analysis of Anti-rust Treated Metal for Comparison Obtained in Comparative Example 1)

XPS analysis was carried out under the following conditions.

### (Surface Analysis Conditions)

Analysis Method:X-ray photoelectron spectrometry (XPS), depth direction analysis
Apparatus:Quantum-2000 (ULVAC-PHI, Inc.)
XPS Measurement
Degree of Vacuum: 5E-9 Torr or less
X-ray Source Al-Kα rays
Angle of Incidence: 45°
Acceleration Voltage: 15 kV
Power: 25 W
Beam Width: Diameter φ100 µm
Argon Ion Sputtering Conditions
Acceleration Voltage: 3 kV
Sputter Area: 2 × 2 mm
Sputter Rate (SiO₂): 10 nm/minute

In the depth direction analysis, the composition was analyzed in the depth direction by repeating (1) argon ion etching for 60 seconds and (2) XPS measurement (zirconium, tungsten, vanadium, fluorine, oxygen, and zinc). Further, the zinc originates from the metal coating of the metal substrate, and the zirconium, tungsten, vanadium, fluorine, and oxygen originate from the anti-rust films.

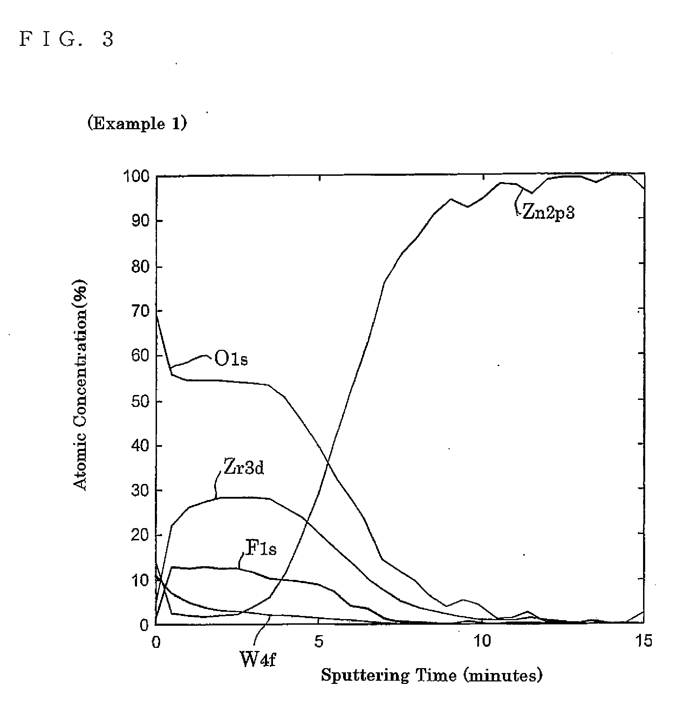

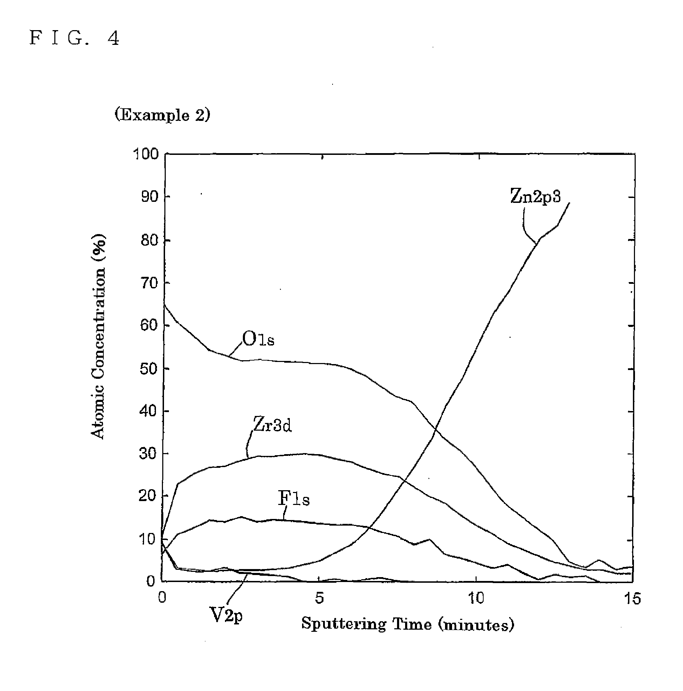

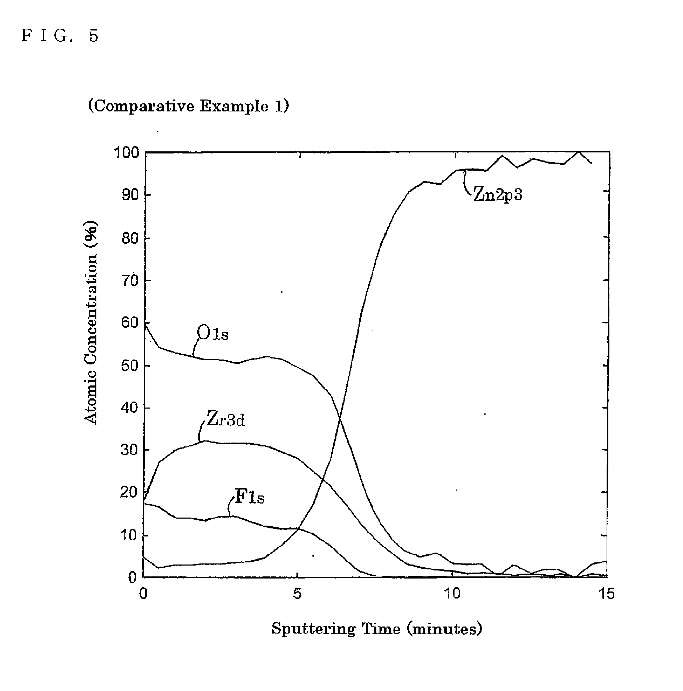

The XPS analysis results of the anti-rust film of the anti-rust treated metals according to the present invention obtained in Examples 1 and 2 are illustrated in Figs. 3 and 4. The XPS analysis results of the anti-rust treated metal for comparison obtained in Comparative Example 1 is illustrated in Fig. 5.

In Figs. 3 to 5, the vertical axis represents atomic concentration (%), and the horizontal axis represents sputtering time (minutes). One minute of sputtering time corresponds to 10 nm (thickness).

In Figs. 3 to 5, the atomic concentrations (%) of zinc, tungsten, zirconium, fluorine, oxygen, and vanadium are represented by the Zn 2P3, W 4f, Zr 3d, F 1s, O 1S, and V 2p curves, respectively.

In Fig. 5, which illustrates the results of XPS analysis on the anti-rust treated metal of Comparative Example 1 that was only treated with the first treatment solution, the metal film (A) can be thought to be in the region of about 10 minutes or more of sputtering time, and the first anti-rust film (B) can be thought to be in the region of about 0 to 10 minutes or more of sputtering time.

Thus, the anti-rust treated metal of Comparative Example 1 that was only treated with the first treatment solution had poor rust resistance.

In Fig. 3, which illustrates the results of XPS analysis on the anti-rust treated metal according to the present invention of Example 1 that was treated with the first and second treatment solutions, the metal film (A) can be thought to be in the region of about 10 minutes or more of sputtering time, the first anti-rust film (B) can be thought to be in the region of about 3 to 10 minutes or more of sputtering time, and the second anti-rust film (C) can be thought to be in the region of about 0 to 5 minutes or more of sputtering time.

Tungsten has permeated into about 1/2 or more of the first anti-rust film. Consequently, the rust resistance is 3 to 5 times better than that of the anti-rust treated metal of Comparative Example 1.

In Fig. 4, which illustrates the results of XPS analysis on the anti-rust treated metal according to the present invention of Example 2 that was treated with the first and second treatment solutions, the metal film (A) can be thought to be in the region of about 10 minutes or more of sputtering time, the first anti-rust film (B) can be thought to be in the region of about 3 to 10 minutes or more of sputtering time, and the second anti-rust film (C) can be thought to be in the region of about 0 to 5 minutes or more of sputtering time.

Vanadium has permeated into about 1/2 or more of the first anti-rust film. Consequently, the rust resistance is 3 to 5 times better than that of the anti-rust treated metal of the Comparative Example 1.

### INDUSTRIAL APPLICABILITY

The anti-rust treated metal according to the present invention provides the remarkable advantages of having excellent rust resistance while also being able to maintain rust resistance even if a cut that reaches the metal substrate occurs on the anti-rust film, since the anti-rust treated metal has on the surface of a metal substrate a plurality of anti-rust films having excellent rust resistance equivalent to that of hexavalent chromium, with the anti-rust films being formed without using a harmful chemical agent that has an impact on the environment like hexavalent chromium.

The method for forming an anti-rust film according to the present invention provides the remarkable advantages of enabling a plurality of anti-rust films having excellent adhesion properties, rust resistance, and rust resistance durability equivalent to hexavalent chromium to be easily formed on the surface of the metal substrate using the composition for forming an anti-rust film according to the present invention, without using a harmful chemical agent that has an impact on the environment such as hexavalent chromium. Therefore, the industrial utility of the method of the present invention is extremely large.

### DESCRIPTION OF REFERENCE NUMERALS

- 1, 1A: anti-rust treated metal
- 2: metal substrate
- 3: metal film
- 4: first anti-rust film
- 5: second anti-rust film
- 6: third anti-rust film

## Claims

1. An anti-rust treated metal, **characterized by** comprising: a first anti-rust film that is formed in close contact with a surface of a metal substrate and that mainly contains a mixture of a zirconium compound and a fluorine compound and/or a compound containing zirconium and fluorine, and a second anti-rust film that is formed on an upper layer portion of the first anti-rust film and that mainly contains a metal ion and/or a metal compound.

2. The anti-rust treated metal according to claim 1, **characterized in that** the metal substrate has a metal surface selected from the group consisting of zinc, nickel, aluminum, magnesium, copper, iron, and an alloy thereof.

3. The anti-rust treated metal according to claim 1 or 2, **characterized in that** the metal ion includes one kind or a mixture of two kinds or more of metal ions of Mo, V, Ti, W, and Zr, and that the metal compound includes one kind or a mixture of two kinds or more of a metal compound including these metals.

4. The anti-rust treated metal according to any of claims 1 to 3, **characterized in that** the fluorine compound is at least one fluorine compound selected from ammonium hydrogen fluoride, hydrofluoric acid, and a hydrogen fluoride alkali metal salt, and that the compound containing zirconium and fluorine is ammonium zirconium fluoride.

5. The anti-rust treated metal according to any of claims 1 to 4, **characterized by** comprising a third anti-rust film mainly containing a silicate or a polymer formed on an upper layer portion of the second anti-rust film.

6. A composition for forming an anti-rust film, **characterized by** comprising: a first treatment solution for treating a surface of a metal substrate, the first treatment solution mainly containing a mixture of a zirconium compound and a fluorine compound and/or a compound containing zirconium and fluorine; a second treatment solution for subsequently treating the surface having been treated by the first treatment solution, the second treatment solution mainly containing a metal ion and/or a metal compound; and optionally a third treatment solution for treating a surface of a second anti-rust film, the third treatment solution mainly containing a silicate or a polymer.

7. The composition for forming an anti-rust film according to claim 6, **characterized in that** a concentration of zirconium in the first treatment solution is in a range of 1 to 50 g/l, a concentration of fluorine is in a range of 1 to 50 g/l, and a pH is in a range of 1.0 to 4.0.

8. The composition for forming an anti-rust film according to claim 6 or 7, **characterized in that** a concentration of the metal ion and/or the metal compound in the second treatment solution is, in terms of metal ions, in a range of 0.01 to 50 g/l, and a pH is in a range of 3.0 to 10.0.

9. A method for forming an anti-rust film, **characterized by**: treating a surface of a metal substrate with the first treatment solution according to claim 6 or 7, then washing with water to form a first anti-rust film that is in close contact with the surface of the metal substrate and that mainly contains a mixture of a zirconium compound and a fluorine compound and/or a compound containing zirconium and fluorine; treating with the second treatment solution according to claim 6 or 8 to form a second anti-rust film on an upper layer portion of the first anti-rust film, the second anti-rust film mainly containing a metal ion and/or a metal compound; then optionally washing with water and drying, or optionally further treating with the third treatment solution according to claim 5 to form a third anti-rust film on an upper layer portion of the second anti-rust film, the third anti-rust film mainly containing a silicate or a polymer, and then optionally washing with water and drying.
